# FASCICULE DE BREVET EUROPEEN

(11) **EP 3 117 159 B1**
(45) Date de publication et mention de la délivrance du brevet: **12.02.2020**
(21) Numéro de dépôt: 15708827.9
(22) Date de dépôt: 10.03.2015
(51) Int. Cl.: F24H 9/20, H02M 7/00, H02J 5/00, F24D 19/10, F24D 17/00, G05D 23/19

(54) **CHAUFFE-EAU ÉLECTRIQUE RÉGLABLE EN PUISSANCE**
ELEKTRO-WASSERERWÄRMER MIT EINSTELLBARER LEISTUNG
ELECTRIC WATER HEATER WITH ADJUSTABLE POWER

(30) Priorité: 11.03.2014 FR 1452022
(43) Date de publication de la demande: 18.01.2017
(73) Titulaire: Electricité de France, 75008 Paris (FR)
(72) Inventeur: WISZNIEWSKI, David, F-77670 Saint Mammes (FR); DENIS, Rémi, F-92350 Le Plessis Robinson (FR); COINCE, Anne-Sophie, F-77210 Avon (FR); BERNASCONI, Stéphane, F-77810 Thomery (FR)
(74) Mandataire: Regimbeau
(86) Numéro de dépôt international: PCT/EP2015/054971
(87) Numéro de publication internationale: WO 2015/135945

(56) Documents cités:
- EP-A1- 2 485 189
- EP-A1- 2 660 943
- EP-A2- 2 610 999
- KR-A- 20130 049 288
- US-A- 5 689 411
- US-A1- 2012 232 706

## Description

### DOMAINE TECHNIQUE GENERAL

La présente invention concerne un système de type chauffe-eau à capacité énergétique modulable.

### ETAT DE L'ART

Le « mix énergétique » désigne la répartition des différentes sources consommées pour la production d'énergie électrique. Ce mix énergétique, en constante évolution, voit la progression constante des Energies Renouvelables, ce qui entraîne un besoin accru en flexibilité des systèmes électriques.

Ces dernières, représentées essentiellement par l'éolien et le photovoltaïque, ne permettent en effet pas une production constante et régulée au contraire d'une centrale nucléaire, d'où des problèmes de variabilité et de prévisibilité de la production associée. Cela fait que les aléas de très court terme vont fortement augmenter.

D'autre part, des problèmes locaux de qualité d'alimentation vont être amplifiés du fait d'une répartition géographique inhomogène des installations, avec par exemple plutôt du photovoltaïque dans le Sud et de l'éolien dans le Nord.

Il apparait essentiel de trouver des solutions de pilotage de la charge associée en vue de maitriser l'aléa lié aux Energies Renouvelables et de satisfaire les contraintes du réseau électrique au sens large.

Il a par exemple été proposé la charge de batteries stationnaires pour faciliter l'insertion massive de panneaux photovoltaïques (démonstrateur « NiceGrid »). Toutefois, les coûts d'investissement élevés ne permettent pas d'envisager un déploiement à grande échelle de cette solution alternative. Il est également prévu d'agir sur la puissance réactive fournie par les panneaux photovoltaïques pour ajuster la tension. Cependant, cette dernière piste ne répond pas aux enjeux de maîtrise de l'aléa éolien.

Alternativement au stockage via batteries, il est possible de stocker l'énergie thermiquement. Avec près de 12 millions d'unités installées en France dont plus de 80% sont asservies au signal tarifaire Heures Pleines/Heures creuses (HP/HC), le parc de Chauffe-Eau Joule (CEJ) à accumulation résidentiel - utilisé aujourd'hui pour le lissage journalier de la courbe de charge - est susceptible de répondre à ces nouveaux enjeux.

La demande de brevet US 2009/0188486 propose à ce titre des chauffe-eau alimentés en courant continu par des modules photovoltaïques. Le système est configuré pour maximiser la fraction solaire, c'est-à-dire minimiser la consommation d'électricité soutirée du réseau tout en maintenant le confort pour l'utilisateur.

Ce système apporte satisfaction, mais ne résout que partiellement le problème : il peut tout à fait y avoir un jour avec un excédent d'énergie électrique issu du panneau photovoltaïque, et le jour suivant avec un temps couvert rendant nécessaire la consommation d'une autre source d'électricité. De plus le système est complexe et n'est utilisable que dans des habitations équipées d'un panneau solaire.

On connait des techniques dites « d'effacement diffus » décrites par exemple dans la demande WO2012/172193, qui permettent de couper automatiquement un équipement électrique tel qu'un radiateur en cas de pic de consommation énergétique. Toutefois, ces techniques n'apportent aucune solution en cas de pic de production d'origine photovoltaïque, et peuvent altérer le confort des usagers.

La demande de brevet EP 2 610 999 A2 propose un système de chauffe-eau régulé en puissance pour consommer l'excès d'énergie renouvelable produite localement par exemple par un panneau solaire, grâce à un régulateur de type thyristor. On constate cependant que ce système ne respecte pas les normes de compatibilité électroniques si la puissance électrique de chauffage est trop importante.

La demande de brevet US 2012/232706 A1 divulgue un système comprenant un dispositif de chauffage alimenté par réseau électrique via un système redresseur-onduleur. Le système ne considère pas l'aspect découpage électrique par exemple en cas de pic de production d'origine photovoltaïque.

Dans le but d'éviter de bruit électrique, le document US 5 689 411 A propose de réaliser d'abord une conversion alternatif-alternatif mettant en œuvre la modulation de puissance, puis une conversion alternatif-continu à puissance constante.

Ainsi, aujourd'hui, aucune solution satisfaisante n'est disponible pour piloter à grande échelle et efficacement la charge liée aux énergies électriques d'origine renouvelable. Il serait souhaitable de disposer d'une manière d'utiliser la capacité de stockage des chauffe-eau joule qui soit facilement déployable, efficace et peu couteuse.

### PRESENTATION DE L'INVENTION

L'invention propose de pallier ces inconvénients en proposant, selon un premier aspect, un système tel que défini dans la revendication 1, comprenant :
- un dispositif de chauffage comprenant au moins un moyen de chauffage alimenté par un réseau électrique à courant alternatif ;
- un module de contrôle dudit dispositif de chauffage ;
le système étant caractérisé en ce que le moyen de chauffage est alimenté via un convertisseur à découpage redressant le courant alternatif du réseau en courant continu, le convertisseur à découpage étant contrôlé par le module de contrôle en fonction d'au moins des données descriptives d'un état dudit réseau électrique, de sorte à réguler en puissance le moyen de chauffage. Le convertisseur à découpage comprend un redresseur et un hacheur.

Le dispositif selon l'invention est avantageusement complété par les caractéristiques suivantes, prises seules ou en une quelconque de leur combinaison techniquement possible :
- le système comprend en outre un réservoir d'eau, le dispositif de chauffage chauffant l'eau du réservoir ;
- le système comprend en outre un élément de gestion configuré pour contrôler le module de contrôle en fonction desdites données descriptives d'un état dudit réseau électrique ;
- le module de contrôle contrôle chaque actionneur de puissance en fonction d'une consigne de puissance émise par l'élément de gestion ;
- l'élément de gestion est configuré pour émettre une consigne de puissance diminuant la consommation du moyen de chauffage lorsque les données descriptives d'un état dudit réseau électrique sont caractéristiques d'un déficit actuel et/ou d'une surabondance future d'énergie d'origine renouvelable au sein dudit réseau électrique, de sorte à diminuer la capacité énergétique du réservoir d'eau ;
- le module de contrôle est configuré pour ignorer la consigne de puissance lorsqu'une température de l'eau du réservoir est inférieure à un premier seuil prédéfini ;
- l'élément de gestion est configuré pour émettre une consigne de puissance augmentant la consommation du moyen de chauffage lorsque les données descriptives d'un état dudit réseau électrique sont caractéristiques d'une surabondance actuelle et/ou d'un déficit futur d'énergie d'origine renouvelable au sein dudit réseau électrique, de sorte à augmenter la capacité énergétique du réservoir d'eau ;
- le module de contrôle est configuré pour ignorer la consigne de puissance lorsqu'une température de l'eau du réservoir est supérieure à un deuxième seuil prédéfini ;
- le système comprend en outre un boitier recevant lesdites données descriptives d'un état dudit réseau électrique depuis un réseau de communication, le boitier étant connecté audit élément de gestion ou au module de contrôle ;
- le moyen de chauffage présente une puissance nominale supérieure à 1.2 kW ;
- le redresseur du convertisseur à découpage comprend un pont de diodes ;
- le hacheur du convertisseur à découpage comprend au moins un transistor de découpage commandé, un microcontrôleur dudit transistor connecté au module de contrôle, au moins une diode, et au moins un élément réactif de filtrage ;
- chaque transistor de découpage commandé est choisi parmi les transistors à effet de champ à grille métal-oxyde (MOSFET) et les transistors bipolaires à grille isolée (IGBT), et chaque élément réactif de filtrage est choisi parmi les capacités et les inductances ;
- le système comprend en outre un moyen de court-circuit du convertisseur à découpage contrôlé par le module de contrôle.

Selon un deuxième aspect, l'invention concerne un procédé de modification de la consommation d'un dispositif de chauffage tel que défini dans la revendication 15, le procédé étant caractérisé en ce qu'il comprend des étapes de :
- réception de données descriptives d'un état d'un réseau électrique à courant alternatif ;
- génération par un élément de gestion d'une consigne de puissance en fonction d'au moins lesdites données descriptives d'un état dudit réseau électrique ;
- émission de ladite consigne à destination d'un module de contrôle d'un moyen de chauffage du dispositif de chauffage, le moyen de chauffage étant alimenté par le réseau électrique via un convertisseur à découpage redressant le courant alternatif du réseau en courant continu ;
- contrôle par le module de contrôle du convertisseur à découpage en fonction de la consigne de puissance de sorte à réguler en puissance le moyen de chauffage.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- la figure 1 est un schéma d'un mode de réalisation préféré d'un système selon l'invention ;
- la figure 2 est un schéma d'un exemple de convertisseur à découpage d'un système selon l'invention.

### DESCRIPTION DETAILLEE

### Architecture générale

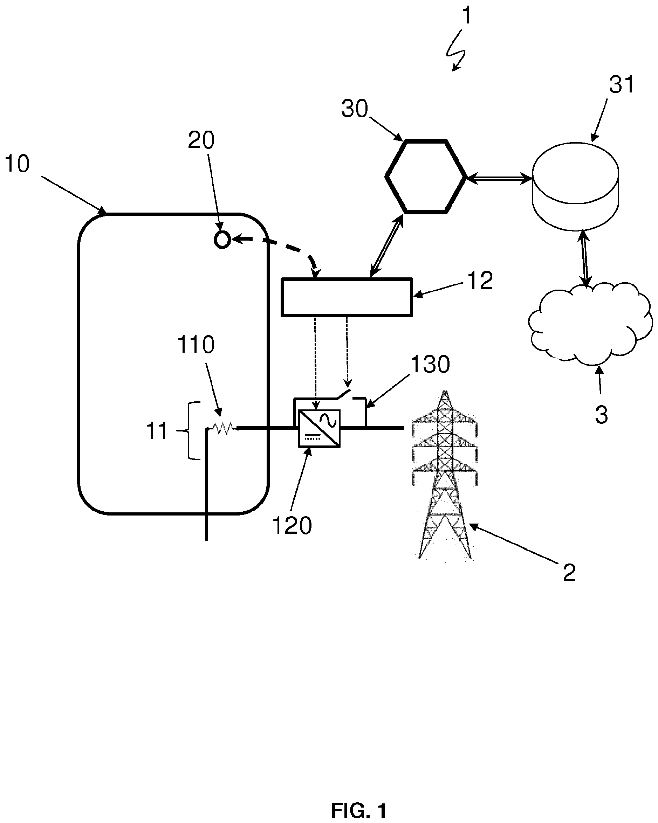

La **figure 1** représente l'architecture générale d'un mode de réalisation préféré du système 1 selon l'invention. Ce système est essentiellement constitué d'un ou plusieurs dispositifs de chauffage 11 comprenant au moins un moyen de chauffage 110 alimenté par un réseau électrique 2. Il s'agit typiquement du réseau domestique 230V alternatif.

Ces dispositifs de chauffage 11, ou « émetteurs », sont typiquement des radiateurs domestiques. Un moyen de chauffage par effet Joule 110 est typiquement une ou plusieurs résistances électriques, qui chauffent de l'air ou un fluide caloporteur (par exemple de l'huile), en échange thermique avec un milieu à chauffer tel que l'air d'une pièce d'un logement. En outre, deux dispositifs 11 peuvent en fait faire partie d'un même émetteur.

De façon préférée, le fluide chauffé est de l'eau (en particulier l'eau d'un réservoir 10), et le système est ainsi un Chauffe-Eau Joule (CEJ) domestique (44% des habitats en sont équipés). Dans la suite de la présente description, on prendra l'exemple d'un système de type chauffe-eau, mais on comprendra que l'invention n'est pas limitée à ces derniers, et s'applique à tout système comprenant au moins un dispositif de chauffage 11.

Un CEJ comprend classiquement :
- un réservoir d'eau 10 (communément appelé « ballon » d'eau chaude) ;
- un dispositif de chauffage 11 de l'eau du réservoir 10, le dispositif 11 comprenant un moyen de chauffage 110 alimenté par un réseau électrique 2 ;
- typiquement une sonde de température 20 configurée pour émettre un signal représentatif de la température de l'eau du réservoir 10 ;
- un module de contrôle 12 dudit dispositif de chauffage 11 en fonction dudit signal émis par la sonde 20.

Le ou les moyens de chauffage électrique 110 du dispositif de chauffage 11 sont en particulier des moyens de chauffage par effet Joule, c'est-à-dire généralement des résistances, d'où le chauffage de l'eau par effet joule. Alternativement, un moyen 110 peut être une pompe à chaleur complète dont la source chaude est en échange thermique avec l'eau du réservoir 10 (et la source froide en échange thermique par exemple avec l'air extérieur), de sorte à permettre un chauffage de l'eau avec une efficacité supérieure à 100%.

De façon préférée, le dispositif 11 est intégralement électrique (il ne comprend ainsi que des moyens de chauffage alimentés par le réseau 2, et pas de bruleurs à gaz par exemple). L'énergie de chauffage fournie à l'eau est alors entièrement d'origine électrique. Le système n'est toutefois pas limité à cette configuration et le dispositif 11 peut alternativement comprendre en outre un moyen de chauffage alternatif (non-électrique) tel qu'un bruleur, un échangeur avec un collecteur solaire, etc.

De façon particulièrement préférée, le dispositif 11 comprend un unique moyen de chauffage 110 de forte puissance, comme on le verra plus loin.

Le réseau 2 est un réseau à grande échelle qui relie une pluralité de sources électriques. Comme expliqué précédemment, il s'agit à la fois d'énergie d'origine non-renouvelable (nucléaire et/ou fossile) et d'énergie d'origine renouvelable (solaire, éolien, etc.). L'énergie d'origine renouvelable présente des problèmes de variabilité et de prévisibilité, alors que l'énergie d'origine non-renouvelable est d'une meilleure disponibilité.

Dans l'hypothèse où l'utilisateur du système 1 comprend une source personnelle d'énergie d'origine renouvelable (par exemple des panneaux photovoltaïques de toit) on comprend que le réseau 2 englobe à la fois le réseau électrique global et le réseau électrique local de l'utilisateur (en d'autres termes que les centrales distantes et les panneaux solaires locaux peuvent aussi bien, l'un que l'autre, alimenter le dispositif de chauffage 11).

Le système 1 est dans un mode de fonctionnement « normal » régulé en température. Pour cela, il comprend avantageusement une ou plusieurs sondes de température 20 et un module de contrôle 12 du dispositif de chauffage 11. La ou les sondes 20 envoient en permanence ou par intermittence un signal représentatif de la température de l'eau du réservoir 10. Ce signal peut être un envoi de données représentant numériquement la température, ou un signal électrique dont un paramètre est fonction de la température.

Le module de contrôle 12 est typiquement une carte électronique qui déclenche ou non le chauffage en fonction de la température de l'eau et de nombreux autres paramètres éventuels (programmation, saison, plages horaires, heures creuses/heures pleines, usages habituels de l'utilisateur, etc.).

De façon générale, un chauffe-eau Joule comprend le plus souvent deux températures de seuil (dont la valeur peut varier selon le moment et des réglages personnels) : une première température de seuil qui est la température « minimale » et une deuxième température de seuil qui est la température « maximale » (le premier seuil est inférieur au deuxième seuil). Ces deux seuils sont quelques degrés autour (par exemple +/- 4°C) d'une température de « confort » qui est la température moyenne souhaitée, réglée par l'utilisateur (l'intervalle 50-65°C est courant).

Le module de contrôle 12 est ainsi configuré pour activer le dispositif de chauffage 11 lorsque le signal reçu est représentatif d'une température inférieure au premier seuil prédéfini, et/ou configuré pour désactiver le dispositif de chauffage 11 lorsque le signal reçu est représentatif d'une température supérieure au deuxième seuil prédéfini.

Ainsi, tant que le dispositif de chauffage 11 est arrêté et que l'on est entre les deux seuils rien ne se passe. Si la température baisse (avec le temps ou parce que l'utilisateur tire de l'eau chaude) et passe en-dessous du premier seuil, le dispositif de chauffage 11 est activé, et ce jusqu'à atteindre le deuxième seuil (température maximale, supérieure au premier seuil). La température se remet ensuite à baisser, etc. En d'autres termes, il y a une alternance de phases de « refroidissement » pendant lesquelles la température descend du deuxième seuil au premier seuil (voir au-delà si l'utilisateur continue d'utiliser de l'eau chaude), et de phases de « chauffe » pendant lesquelles la température monte sous l'effet du dispositif 11 allumé d'une température inférieure ou égale au premier seuil jusqu'au deuxième seuil.

Comme expliqué avant, cette configuration peut dépendre d'autres paramètres, et il peut y avoir plus de deux seuils, éventuellement mobiles, par exemple de façon à optimiser la consommation d'énergie pendant les heures creuses (les chauffe-eau sont souvent prévus pour remonter l'eau en température préférentiellement au petit matin, de sorte à maximiser l'utilisation des heures creuses et avoir de l'eau chaude en quantité au moment de se doucher).

En pratique, les premier et deuxième seuils sont souvent la conséquence d'un phénomène d'hystérésis autour d'une valeur médiane, qui définit ces deux seuils. L'écart induit est alors d'environ 3°C.

La présente invention n'est limitée à aucune configuration en particulier, on comprendra que de façon générale le module de contrôle 12 régule la température du réservoir 10 via l'activation/désactivation du dispositif de chauffage 11 en fonction de signaux qui lui sont émis, signaux pouvant représenter des températures et/ou des consignes de fonctionnement.

### Convertisseur à découpage

Le moyen de chauffage 110 (et de façon préférée chaque moyen de chauffage voire l'ensemble des éléments électriques du dispositif 11) est alimenté via un convertisseur à découpage 120. Cela signifie que le convertisseur à découpage 120 est interposé entre le réseau 2 et le moyen de chauffage 110, de sorte à lui fournir l'électricité selon une intensité et/ou une tension (en particulier seulement la tension) éventuellement différentes de celles du réseau électrique 2.

Un convertisseur à découpage est en effet un type d'actionneur de puissance, c'est-à-dire un composant permettant de modifier la puissance du moyen de chauffage 110 qu'il alimente. En particulier, un convertisseur de puissance modifie l'intensité et/ou la tension (en particulier les deux en même temps de façon proportionnelle) sur la branche de sorte à doser la puissance effective consommée par le moyen de chauffage 110 entre 0 et 100% de sa valeur nominale (i.e. sa puissance maximale). En d'autres termes, à un moyen de chauffage de puissance nominale P est associée une puissance effective *Peff* = *A* * *P,* où *A* est le ratio de puissance variable du convertisseur à découpage.

On connait de nombreux actionneurs de puissance, allant des relais (i.e. des dispositifs en fonctionnement tout-ou-rien de type interrupteur pour lequel le ratio de puissance A associé vaut 0 (état ouvert) ou 1 (état passant)) à des alimentations complexes. Un relais peut être classiquement électromécanique, mais également à semi-conducteurs (relais statiques, voir plus loin).

Un convertisseur est un dispositif capable de modifier un signal électrique dans le but de faire varier sa tension de sortie de façon continue (ou presque, les convertisseurs commutés en moyenne fréquence ont bien des états discrets mais la moyenne instantanée à la fréquence réseau de ces états discrets (après filtrage) permet un pilotage en continu. Par opposition un relais fait varier la tension de façon purement discrète). Le ratio de puissance associé A est à valeur dans l'intervalle [0;1].

Par convertisseur à découpage, on entend un convertisseur électrique dans lequel la régulation est assurée par des composants électrotechniques utilisés en commutation (en particulier des transistors), c'est-à-dire basculant à haute fréquence (quelques centaines de Hz à quelques dizaines de kHz) d'un état ouvert à un état passant. Les convertisseurs à découpage sont des composants dit à modulation s'opposant aux convertisseurs linéaires dans lesquels les composants électrotechniques sont utilisés en mode linéaire (c'est-à-dire sans discontinuités dans le courant continu en sortie résultant de la commutation).

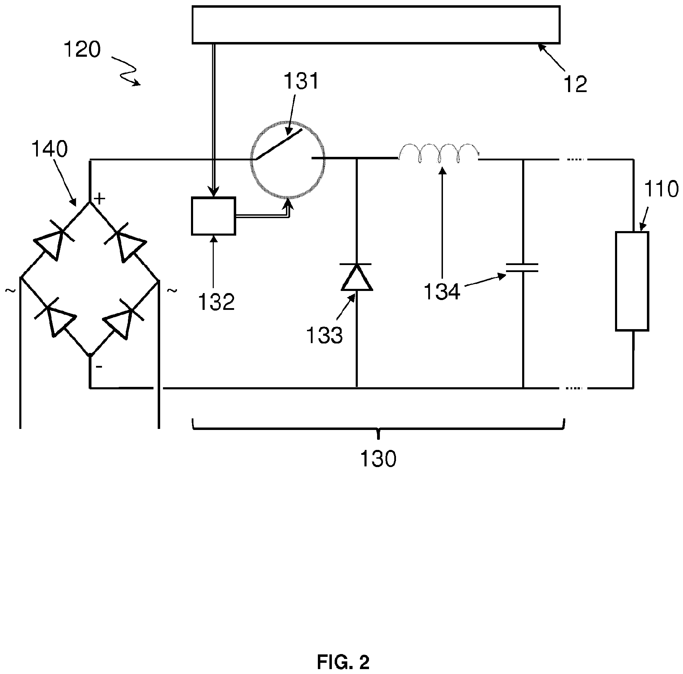

Le présent convertisseur 120 est un convertisseur redressant le courant alternatif du réseau électrique 2 (courant domestique 230V) en courant continu. Plus précisément, le convertisseur à découpage 120 du système 1 comprend un redresseur 140 (pur convertisseur alternatif-continu, i.e. à puissance constante) et un hacheur 130 (convertisseur continu-continu mettant en œuvre la modulation de puissance), comme l'on voit par exemple dans l'exemple de la figure 2 qui sera décrite plus loin. En d'autres termes, le moyen de chauffage 110 est alimenté via un convertisseur à découpage 120 comprenant un redresseur 140 redressant le courant alternatif du réseau 2 en courant continu et un hacheur 130 contrôlé par le module de contrôle 12 de sorte à réguler en puissance le moyen de chauffage 110.

Il est à noter que la modulation de puissance est éventuellement suivie d'une deuxième conversion continu-alternatif en sortie du hacheur 130 (grâce à un convertisseur appelé onduleur), mais on comprendra que le présent convertisseur 120 ne met en aucune manière en œuvre une conversion directe alternatif-alternatif.

Les convertisseurs à découpage présentent un bien meilleur rendement que les convertisseurs linéaires, ce qui prévient un gaspillage d'électricité et permet des dimensions bien moindres (la nécessité d'un radiateur de dissipation de taille conséquente est évitée). En contrepartie, un convertisseur à découpage génère davantage d'harmoniques haute fréquence. Mais paradoxalement, des tests mis en œuvre par la Demanderesse ont montré que pour des puissances aux bornes du convertisseur à découpage 120 (puissance nominale du moyen de chauffage 110 associé) au-delà de 1.2 kW, les harmoniques produites lors d'un hachage du courant continu restent acceptables et le système répond aux exigences des normes de Compatibilité Électromagnétique (CEM), contrairement à ce qui se passe pour d'autres types d'actionneurs de puissance tels que les gradateurs (convertisseurs directs alternatif-alternatif utilisant uniquement des semi-conducteurs commandés par exemple de type thyristor, voir par exemple la demande EP0104979 qui décrit l'alimentation d'un chauffe-eau via un gradateur utilisant un triac commuté à une heure prédéterminée, ce afin d'étaler dans le temps une hausse de puissance). Dans la mesure où la plupart des systèmes de type CEJ ont une puissance supérieure à 1.2 kW (typiquement 3kW), le présent convertisseur à découpage 120 est optimal pour cette application.

On connait de nombreux types de convertisseur à découpage mettant en œuvre une conversion alternatif - continu. Un tel convertisseur à découpage 120 est le plus souvent un dispositif électronique comprenant une partie redresseur 140 et une partie hacheur 130, comme expliqué avant. La partie redresseur 140 permet la conversion courant alternatif - courant continu en entrée, et comprend typiquement pour cela un pont de diodes (voir figure 2). La partie hacheur 130 met en œuvre la modulation électronique de puissance sur courant continu, et comprend typiquement au moins un transistor de découpage commandé 131 (en particulier choisi parmi les transistors à effet de champ à grille métal-oxyde (MOSFET, « Metal Oxide Semiconductor Field Effect Transistor ») et les transistors bipolaires à grille isolée (IGBT, « Insulated Gâte Bipolar Transistor »)), un microcontrôleur 132 dudit transistor 131 (par exemple un ASIC, « Application-Specific Integrated Circuit ») connecté au module de contrôle 12, au moins une diode 133 (discrète et/ou en pont), et au moins un élément réactif de filtrage 134 (en particulier choisi parmi les capacités et les inductances).

Schématiquement, les éléments réactifs de filtrage 134 agissent comme des éléments de stockage idéal, et la commutation à haute fréquence du transistor 131 entraîne une alternance de charges et décharges de ces éléments 134 (la ou les diodes 133 empêchent le retour du courant), d'où la délivrance d'un courant continu de puissance modulée. Le microcontrôleur 132 détermine le rapport cyclique (c'est-à-dire le ratio du temps pendant lequel le transistor 131 est passant sur le temps d'une période de commutation) en fonction du ratio de puissance souhaité et des caractéristiques des composants du convertisseur 120. On parle de « modulation électronique » de la puissance.

La figure 2 représente un exemple d'un convertisseur à découpage 120 basique. Il comprend deux éléments 134 (une capacité et une inductance) et une diode 133.

Dans le présent système, le convertisseur à découpage 120 permet à lui seul de réguler en puissance la totalité du dispositif de chauffage 11 en fonction de données descriptives d'un état dudit réseau électrique 2 (voir plus loin). Pour cela, le convertisseur à découpage 120 (et plus précisément le hacheur 130, dans la mesure où le redresseur 140 n'est pas commandé) est contrôlé par le module de contrôle 12 de sorte à réguler en puissance le moyen de chauffage 110 qu'il alimente. Par contrôle, on entend que le module de contrôle 12 est adapté pour déterminer et imposer le ratio de puissance A du convertisseur à découpage 120 en fonction des consignes qu'il reçoit. Il devient ainsi possible de réguler facilement et simplement en puissance le dispositif de chauffage 11 en pouvant le faire fonctionner à n'importe quelle puissance entre 0 et la puissance nominale maximum, et ce tout en limitant les harmoniques. De plus, comme expliqué, le système présente un bon rendement, est fiable et peu encombrant.

Le mécanisme de régulation en puissance permet ainsi d'utiliser les chauffe-eau installés pour gérer la production électrique d'origine renouvelable, et ce facilement et efficacement : la modification de la puissance effective du moyen de chauffage 110 permet en effet d'augmenter ou de diminuer sur commande la consommation de ces chauffe-eau et de jouer sur l'énergie stockée en tant qu'eau chaude. La capacité énergétique devient modulable. Plusieurs TWh sont ainsi disponibles à l'échelle du territoire français par exemple. On note qu'il est ainsi facile de modifier un chauffe-eau existant en insérant simplement le convertisseur à découpage 120 entre l'alimentation électrique 230V et le moyen de chauffage, et ce, sans complexifier l'installation électrique.

Ceci permet par exemple de privilégier la consommation électrique tant que le photovoltaïque est largement disponible, et de limiter la consommation électrique ou se rabattre sur d'autres énergie (par exemple via des moyens de chauffage alternatifs tels des bruleurs si le dispositif 11 en comprend), lorsque le photovoltaïque est déficitaire.

Par exemple, pendant une phase de chauffe de l'eau (et donc de remontée en température du réservoir 10), la puissance peut être augmentée, ce qui chauffe plus vite l'eau. Ainsi, davantage d'électricité est consommée, cette électricité étant stockée sous forme de capacité calorifique de l'eau (4185 J.*kg*⁻¹.*K*⁻¹).

Par capacité énergétique du réservoir 10, on entend en effet la quantité maximale d'énergie stockable sous forme thermique via l'eau chaude.

En référence à nouveau à la figure 1, le système comprend avantageusement un moyen de court-circuit 150 du convertisseur à découpage 120 contrôlé par le module de contrôle 12. En d'autres termes, le système 1 peut comprendre une branche parallèle équipée d'un actionneur de puissance de type relais (notamment un relais statique par exemple de type thyristor). Ce moyen de court-circuit 150 permet, lorsqu'il est passant, de contourner le convertisseur à découpage 120 et d'alimenter directement le moyen de chauffage 110 (en d'autres termes de réaliser un « bypass » du convertisseur 120) lorsqu'aucune correction de la puissance n'est requise. De façon préférée, le système ne comprend aucun autre actionneur de puissance que le convertisseur à découpage 120 et un relais sur un éventuel moyen de court-circuit 150.

### Mécanisme de gestion

Les données descriptives de l'état du réseau électrique 2 peuvent être transmises directement au module de contrôle 12. Mais de façon préférée, le module de contrôle est un équipement standard, et le système 1 comprend en outre un élément de gestion 30 connecté au module de contrôle 12. Cet élément de gestion 30 est configuré pour contrôler le module de contrôle 12 en fonction d'au moins des données descriptives d'un état dudit réseau électrique 2.

En d'autres termes, l'élément de gestion 30 agit comme un module de pré-traitement des données descriptives de l'état du réseau 2.

L'élément de gestion 30 s'intègre à un module de contrôle 12 d'un CEJ existant, et ne nécessite pas de modification structurelle. En particulier, il n'y a que peu de modifications du module de contrôle 12 qui ne réalise qu'un « post-traitement » (on verra plus loin en quoi il consiste). Il est ainsi facile et peu coûteux de modifier les équipements existants. Dans le cas de chauffe-eau neufs, l'élément de gestion 30 peut être directement intégré au module de contrôle 12 comme une fonction supplémentaire afin d'éliminer la nécessité de boitier supplémentaire (en d'autres termes le module de contrôle 12 traite directement les données descriptives de l'état du réseau électrique 2).

Ces données désignent de façon générale toutes les informations sur la charge du réseau 2, le taux d'énergie d'origine renouvelable, les prévisions de variation de ce taux, la production/consommation en général, etc.

Ces données peuvent être des données génériques obtenues localement, par exemple d'origine météorologique, qui peuvent indiquer dans quelle mesure les moyens de production d'énergie renouvelable vont être productifs, mais de façon préférée il s'agit de données plus complexes fournies depuis un réseau de communication 3 (typiquement le réseau internet) via un boitier 31, en particulier en temps réel.

Dans un premier mode de réalisation, le boitier 31 est un compteur électrique intelligent (par exemple LINKY) disposant d'un émetteur Télé-Information Client (TIC) intégré ou non. Les données utilisées peuvent notamment être les champs de la TIC tels que par exemple : l'état binaire d'un ou plusieurs contact(s) virtuel(s), l'index tarifaire de la grille fournisseur et/ou distributeur en cours, le prix de l'électricité, le préavis de pointe mobile et/ou une ou plusieurs pointe(s) mobile(s), etc.

Dans un deuxième mode de réalisation, le boitier 31 est un équipement d'accès à internet de type « box » d'un fournisseur d'accès à Internet. Le boitier 31 est connecté à l'élément de gestion 30 par des moyens de connexion réseau tels que le Wi-Fi, une liaison Ethernet, le CPL, etc. les données peuvent être alors des données météorologiques complètes (vitesse du vent, ensoleillement, etc.), des données pré-traitées sur des serveurs d'un fournisseur d'électricité pour optimiser la charge globale, etc.

Dans un troisième mode de réalisation, le boitier 31 est un gestionnaire d'énergie connecté via une liaison filaire/radio à un ou plusieurs compteurs électriques associés à des points de production d'énergie d'origine renouvelable (en particulier si l'énergie d'origine renouvelable a un ou plusieurs points de livraison locaux dédiés). La liaison peut être mono ou bidirectionnelle. L'accès à des compteurs permet un suivi en temps réel complet de la production d'énergie d'origine photovoltaïque et de la consommation du ou des logements.

La présente invention n'est ni limitée à un type de données descriptives d'un état dudit réseau électrique 2, ni à une manière de fournir ces données.

### Modes suralimentation et sous-alimentation

Selon un mode de réalisation préféré, l'élément de gestion 30 détermine une consigne de puissance (c'est-à-dire une valeur cible de puissance effective) en fonction des données descriptives de l'état du réseau 2. Le module de contrôle 12 contrôle alors chaque actionneur de puissance en fonction d'une consigne de puissance émise par l'élément de gestion 30.

En particulier, l'élément de gestion 30 met en œuvre un premier et/ou un deuxième type de fonctionnement.

Le premier est le mode « suralimentation » (en d'autres termes « marche forcée ») utilisé pour augmenter la consommation du CEJ et donc la quantité d'énergie stockée. Dans ce mode, l'élément de gestion 30 est configuré pour émettre une consigne d'augmentation de puissance (en d'autres termes une consigne de puissance augmentant la consommation du moyen de chauffage 110) lorsque les données descriptives d'un état dudit réseau électrique 2 sont caractéristiques d'une surabondance actuelle et/ou d'un déficit futur d'énergie (d'origine renouvelable ou non) au sein dudit réseau électrique 2 (en d'autres termes si la production d'origine renouvelable est à la baisse à court terme), de sorte à augmenter la capacité énergétique du réservoir d'eau 10.

Ce mode suralimentation est intéressant soit pour absorber une forte production de photovoltaïque, soit une prévision de faible production. Grâce à la suralimentation, l'effet du dispositif 10 est amplifié. Cela augmente donc la consommation immédiate, mais limite la consommation à venir (puisque plus d'énergie est stockée, le prochain franchissement du premier seuil de température est retardé).

La valeur de la consigne de puissance peut être telle à consommer au maximum le surplus d'énergie d'origine renouvelable sans toucher à l'énergie d'origine non renouvelable. La valeur peut également être une valeur fixe, ou la valeur actuelle de consommation plus un écart prédéterminé (par exemple +500W).

Il est à noter que ce mode suralimentation peut être complété de certaines options : si les données déclenchant la suralimentation sont fournies par un compteur équipé d'un module TIC, ce dernier peut augmenter temporairement et simultanément à l'enclenchement du chauffe-eau la valeur de la puissance de coupure pour éviter tout risque de disjonction en absence de délesteur ou de gestionnaire d'énergie. De plus, si le système de chauffage de l'eau est asservi au signal tarifaire via un contact sec ou virtuel, ce dernier devra être piloté de manière à permettre l'alimentation électrique de ce système en dehors des plages normales autorisées si nécessaire. En outre, si les points de soutirage d'eau chaude sanitaire (douche, robinets, etc.) en aval ne sont pas tous équipés de mitigeur, l'ajout d'une vanne de mélange en sortie du réservoir 10 permet d'éviter les risques de brûlure dus à la fourniture d'eau plus chaude.

Le deuxième mode est le mode « sous-alimentation » (en d'autres termes « marche réduite ») utilisé pour diminuer la consommation du CEJ et donc la quantité d'énergie stockée. Dans ce mode, l'élément de gestion 30 est configuré pour émettre une consigne de diminution de puissance (en d'autres termes une consigne de puissance diminuant la consommation du moyen de chauffage 110), lorsque les données descriptives d'un état dudit réseau électrique 2 sont caractéristiques d'un déficit actuel et/ou d'une surabondance future d'énergie d'origine renouvelable au sein dudit réseau électrique 2 (en d'autres termes si la production d'origine renouvelable est à la hausse à court terme), de sorte à diminuer la capacité énergétique du réservoir d'eau 10.

Cela peut être très utile en prévision d'un pic de production d'énergie d'origine renouvelable ou lors d'un pic de consommation. On évite ainsi de consommer de l'énergie fossile alors que l'on sait que l'énergie renouvelable sera bientôt trop abondante. Cette baisse volontaire de consommation est appelée effacement.

La consigne de baisse de puissance peut être calculée de sorte à minimiser une consommation d'énergie d'origine non-renouvelable. L'idée est de ne pas (ou le moins possible) soutirer d'énergie d'origine non-renouvelable au réseau 2. Ce peut être également une valeur fixe, ou la valeur actuelle de consommation moins un écart prédéterminé (par exemple -500W).

Il est à noter que les deux modes (marche réduite et marche forcée) peuvent cohabiter et être mis en œuvre à tour de rôle. Dans l'un comme dans l'autre, l'application de la consigne de puissance peut être précédée et/ou suivie d'une rampe pour éviter un effet rebond ; en d'autres termes on augmente/diminue progressivement la consigne de puissance (par exemple linéairement sur un intervalle de 30 minutes), au lieu de basculer immédiatement.

Par ailleurs, l'activation de l'un ou l'autre des modes, le choix d'une consigne de puissance fixe ou variable, les seuils de températures, etc., peuvent être contrôlés par l'utilisateur via une interface adaptée.

Il est également à noter que la régulation en puissance ne peut pas se faire au détriment du confort de l'utilisateur, et pour chacun des modes, le module de contrôle 12 peut être est configuré pour ignorer la consigne de puissance lorsqu'une température de l'eau du réservoir 10 (mesurée par une sonde 20 connectée au module de contrôle 12) est inférieure au premier seuil prédéfini (pour le deuxième mode) ou supérieure à un deuxième seuil prédéfini (pour le premier mode).

### Fonctionnement de l'élément de gestion

L'élément de gestion 30 peut comprendre un module de traitement de données (un processeur) configuré pour recevoir desdites données descriptives d'un état dudit réseau électrique 2 et générer à destination du module de contrôle 12 la consigne de puissance. Si le module de contrôle 12 est une carte électronique évoluée comprenant déjà un processeur, l'élément de gestion 30 peut être, comme expliqué, un module logiciel directement mis en œuvre par le module de contrôle 12.

### Pilotage du convertisseur à découpage

Comme expliqué, le module de contrôle 12 détermine les ratios de puissance A du convertisseur à découpage 120 en fonction de la consigne de puissance qu'il reçoit. En d'autres termes, il calcule les valeurs de ces ratios à choisir tels que la puissance effective corresponde à la consigne de puissance. De nombreux algorithmes peuvent être utilisés pour déterminer ces valeurs.

Il peut par ailleurs être prévu qu'en l'absence de consigne de puissance reçue, le module de contrôle 12 active le moyen de court-circuit 130 de sorte à ne plus mettre en œuvre de régulation en puissance.

### Procédé

Selon un deuxième aspect, l'invention concerne également un procédé de modification de la consommation d'un dispositif de chauffage électrique mis en œuvre par le système 1 selon le premier aspect de l'invention (et plus précisément d'un procédé de modification de la capacité énergétique d'un réservoir d'eau 10 si le système 1 est un chauffe-eau).

Ce procédé comprend des étapes de :
- réception de données descriptives d'un état d'un réseau électrique 2 (comme expliqué par exemple depuis un boitier 31) ;
- génération par un élément de gestion 30 d'une consigne de puissance en fonction d'au moins lesdites données descriptives d'un état dudit réseau électrique 2 ;
- émission de ladite consigne à destination d'un module de contrôle 12 d'un moyen de chauffage 110 du dispositif de chauffage 11 (en particulier un dispositif de chauffage 11 de l'eau du réservoir 10, mais on comprendra que si le système 1 est un système de chauffage conventionnel, le dispositif 11 peut chauffer l'air ambiant ou un autre fluide), le moyen de chauffage 110 étant alimenté par le réseau électrique 2 via un convertisseur à découpage 120 redressant le courant alternatif du réseau 2 en courant continu ;
- contrôle par le module de contrôle 12 du convertisseur à découpage 120 (en particulier d'un hacheur 130 du convertisseur 120) en fonction de la consigne de puissance de sorte à réguler en puissance le moyen de chauffage 110 (cette étape consiste en la détermination du ratio de puissance A).

On rappelle que l'élément de gestion 30 peut être uniquement une fonctionnalité intégrée au module de contrôle 12 (qui reçoit alors directement les données descriptives de l'état du réseau 2).

Selon le premier mode de fonctionnement décrit précédemment, le système 1 est en mode « suralimentation ». Ce mode est déclenché lorsque les données descriptives d'un état dudit réseau électrique 2 sont caractéristiques d'une surabondance actuelle et/ou d'un déficit futur d'énergie d'origine renouvelable au sein dudit réseau électrique 2.

La consigne de puissance est une consigne d'augmentation de la consommation du moyen de chauffage 110, de sorte à augmenter la capacité énergétique du réservoir 10.

Selon le deuxième mode de fonctionnement décrit précédemment, le système 1 est en mode « sous-alimentation ». Ce mode est déclenché lorsque les données descriptives d'un état dudit réseau électrique 2 sont caractéristiques d'un déficit actuel et/ou d'une surabondance future d'énergie d'origine renouvelable au sein dudit réseau électrique 2.

La consigne de puissance est alors une consigne de diminution de la consommation du moyen de chauffage 110, de sorte à diminuer la capacité énergétique du réservoir 10.

## Revendications

1. Système (1) comprenant :
- un dispositif de chauffage (11) comprenant au moins un moyen de chauffage (110) alimenté par un réseau électrique (2) à courant alternatif ;
- un module de contrôle (12) dudit dispositif de chauffage (11) ;
le système étant **caractérisé en ce que** le moyen de chauffage (110) est alimenté via un convertisseur à découpage (120) redressant le courant alternatif du réseau (2) en courant continu, le convertisseur à découpage (120) comprenant un redresseur (140) et un hacheur (130), le convertisseur à découpage (120) étant contrôlé par le module de contrôle (12) en fonction d'au moins des données descriptives d'un état dudit réseau électrique (2) caractéristiques d'un déficit et/ou d'une surabondance, actuel(le) et/ou futur(e), d'énergie d'origine renouvelable au sein dudit réseau électrique (2), de sorte à réguler en puissance le moyen de chauffage (110).

2. Système selon la revendication 1, comprenant en outre un réservoir d'eau (10), le dispositif de chauffage (11) chauffant l'eau du réservoir (10).

3. Système selon l'une des revendications 1 et 2, comprenant en outre un élément de gestion (30) configuré pour contrôler le module de contrôle (12) en fonction desdites données descriptives d'un état dudit réseau électrique (2).

4. Système selon la revendication 3, dans lequel le module de contrôle (12) contrôle chaque actionneur de puissance en fonction d'une consigne de puissance émise par l'élément de gestion (30).

5. Système selon les revendications 2 et 4 en combinaison, dans lequel l'élément de gestion (30) est configuré pour émettre une consigne de puissance diminuant la consommation du moyen de chauffage (110) lorsque les données descriptives d'un état dudit réseau électrique (2) sont caractéristiques d'un déficit actuel et/ou d'une surabondance future d'énergie d'origine renouvelable au sein dudit réseau électrique (2), de sorte à diminuer la capacité énergétique du réservoir (10).

6. Système selon la revendication 5, dans lequel le module de contrôle (12) est configuré pour ignorer la consigne de puissance lorsqu'une température de l'eau du réservoir (10) est inférieure à un premier seuil prédéfini.

7. Système selon la revendication 2 et l'une des revendications 4 à 6 en combinaison, dans lequel l'élément de gestion (30) est configuré pour émettre une consigne de puissance augmentant la consommation du moyen de chauffage (110) lorsque les données descriptives d'un état dudit réseau électrique (2) sont caractéristiques d'une surabondance actuelle et/ou d'un déficit futur d'énergie d'origine renouvelable au sein dudit réseau électrique (2), de sorte à augmenter la capacité énergétique du réservoir (10).

8. Système selon la revendication 7, dans lequel le module de contrôle (12) est configuré pour ignorer la consigne de puissance lorsqu'une température de l'eau du réservoir (10) est supérieure à un deuxième seuil prédéfini.

9. Système selon l'une des revendications 3 à 8, comprenant en outre un boitier (31) recevant lesdites données descriptives d'un état dudit réseau électrique (2) depuis un réseau de communication (3), le boitier (31) étant connecté audit élément de gestion (30) ou au module de contrôle (12).

10. Système selon l'une des revendications précédentes, dans lequel le moyen de chauffage (110) présente une puissance nominale supérieure à 1.2 kW.

11. Système selon l'une des revendications 1 à 10, dans lequel le redresseur (140) du convertisseur à découpage (120) comprend un pont de diodes.

12. Système selon l'une des revendications 1 à 11, dans lequel le hacheur (130) du convertisseur à découpage (120) comprend au moins un transistor de découpage commandé (131), un microcontrôleur (132) dudit transistor (131) connecté au module de contrôle (12), au moins une diode (133), et au moins un élément réactif de filtrage (134).

13. Système selon la revendication 12, dans lequel chaque transistor de découpage commandé (131) est choisi parmi les transistors à effet de champ à grille métal-oxyde (MOSFET) et les transistors bipolaires à grille isolée (IGBT), et chaque élément réactif de filtrage (134) est choisi parmi les capacités et les inductances.

14. Système selon l'une des revendications précédentes, comprenant en outre un moyen de court-circuit (150) du convertisseur à découpage (120) contrôlé par le module de contrôle (12).

15. Procédé de modification de la consommation d'un dispositif de chauffage (11), le procédé étant **caractérisé en ce qu'**il comprend des étapes de :
- réception de données descriptives d'un état d'un réseau électrique (2) à courant alternatif, caractéristiques d'un déficit et/ou d'une surabondance, actuel(le) et/ou futur(e), d'énergie d'origine renouvelable au sein dudit réseau électrique (2) ;
- génération par un élément de gestion (30) d'une consigne de puissance en fonction d'au moins lesdites données descriptives d'un état dudit réseau électrique (2) ;
- émission de ladite consigne à destination d'un module de contrôle (12) d'un moyen de chauffage (110) du dispositif de chauffage (11), le moyen de chauffage (110) étant alimenté par le réseau électrique (2) via un convertisseur à découpage (120) redressant le courant alternatif du réseau (2) en courant continu, le convertisseur à découpage (120) comprenant un redresseur (140) et un hacheur (130) ;
- contrôle par le module de contrôle (12) du convertisseur à découpage (120) en fonction de la consigne de puissance de sorte à réguler en puissance le moyen de chauffage (110).

## Patentansprüche

1. System (1), umfassend:
- eine Heizvorrichtung (11), die mindestens ein Heizmittel (110) umfasst, das von einem elektrischen Wechselstromnetz (2) gespeist wird;
- ein Modul zum Steuern (12) der Heizvorrichtung (11);
wobei das System **dadurch gekennzeichnet ist, dass** das Heizmittel (110) über einen Schaltwandler (120) gespeist wird, der den Wechselstrom des Netzes (2) zu Gleichstrom gleichrichtet, wobei der Schaltwandler (120) einen Gleichrichter (140) und einen Zerhacker (130) umfasst, wobei der Schaltwandler (120) vom Steuermodul (12) mindestens in Abhängigkeit von beschreibenden Daten eines Zustands des elektrischen Netzes (2) gesteuert wird, die für einen aktuellen und/oder künftigen Mangel und/oder Überschuss an Energie aus erneuerbaren Quellen innerhalb des elektrischen Netzes (2) charakteristisch sind, um die Leistung des Heizmittels (110) zu regeln.

2. System nach Anspruch 1, das weiter einen Wasserspeicher (10) umfasst, wobei die Heizvorrichtung (11) das Wasser des Speichers (10) erhitzt.

3. System nach einem der Ansprüche 1 und 2, das weiter ein Verwaltungselement (30) umfasst, das dafür konfiguriert ist, das Steuermodul (12) in Abhängigkeit von den beschreibenden Daten eines Zustands des elektrischen Netzes (2) zu steuern.

4. System nach Anspruch 3, wobei das Steuermodul (12) jedes Leistungsstellglied in Abhängigkeit von einem Leistungssollwert steuert, der vom Verwaltungselement (30) ausgegeben wird.

5. System nach den Ansprüchen 2 und 4 in Kombination, wobei das Verwaltungselement (30) dafür konfiguriert ist, einen Leistungssollwert auszugeben, der den Verbrauch des Heizmittels (110) senkt, wenn die beschreibenden Daten eines Zustands des elektrischen Netzes (2) für einen aktuellen Mangel und/oder einen künftigen Überschuss an Energie aus erneuerbaren Quellen innerhalb des elektrischen Netzes (2) charakteristisch sind, um die Energiekapazität des Speichers (10) zu senken.

6. System nach Anspruch 5, wobei das Steuermodul (12) dafür konfiguriert ist, den Leistungssollwert zu ignorieren, wenn eine Temperatur des Wassers des Speichers (10) kleiner ist als eine erste vordefinierte Schwelle.

7. System nach Anspruch 2 und einem der Ansprüche 4 bis 6 in Kombination, wobei das Verwaltungselement (30) dafür konfiguriert ist, einen Leistungssollwert auszugeben, der den Verbrauch des Heizmittels (110) steigert, wenn die beschreibenden Daten eines Zustands des elektrischen Netzes (2) für einen aktuellen Überschuss und/oder einen künftigen Mangel an Energie aus erneuerbaren Quellen innerhalb des elektrischen Netzes (2) charakteristisch sind, um die Energiekapazität des Speichers (10) zu steigern.

8. System nach Anspruch 7, wobei das Steuermodul (12) dafür konfiguriert ist, den Leistungssollwert zu ignorieren, wenn eine Temperatur des Wassers des Speichers (10) größer ist als eine zweite vordefinierte Schwelle.

9. System nach einem der Ansprüche 3 bis 8, das weiter einen Kasten (31) umfasst, der die beschreibenden Daten eines Zustands des elektrischen Netzes (2) von einem Kommunikationsnetz (3) empfängt, wobei der Kasten (31) mit dem Verwaltungselement (30) oder mit dem Steuermodul (12) verbunden ist.

10. System nach einem der vorstehenden Ansprüche, wobei das Heizmittel (110) eine Nennleistung von größer als 1,2 kW aufweist.

11. System nach einem der Ansprüche 1 bis 10, wobei der Gleichrichter (140) des Schaltwandlers (120) eine Diodenbrücke umfasst.

12. System nach einem der Ansprüche 1 bis 11, wobei der Zerhacker (130) des Schaltwandlers (120) mindestens einen gesteuerten Schalttransistor (131), eine Mikrosteuerung (132) des Transistors (131), die mit dem Steuermodul (12) verbunden ist, mindestens eine Diode (133) und mindestens ein reaktives Filterelement (134) umfasst.

13. System nach Anspruch 12, wobei jeder gesteuerte Schalttransistor (131) ausgewählt ist aus Metall-Oxid-Gate-Feldeffekttransistoren (MOSFET) und Bipolartransistoren mit isoliertem Gate (IGBT), und jedes reaktive Filterelement (134) aus Kapazitäten und Induktivitäten ausgewählt ist.

14. System nach einem der vorstehenden Ansprüche, das weiter ein Mittel zum Kurzschließen (150) des Schaltwandlers (120) umfasst, das vom Steuermodul (12) gesteuert wird.

15. Verfahren zum Modifizieren des Verbrauchs einer Heizvorrichtung (11), wobei das Verfahren **dadurch gekennzeichnet ist, dass** es Schritte umfasst des:
- Empfangens von beschreibenden Daten eines Zustands eines elektrischen Wechselstromnetzes (2), die für einen aktuellen und/oder künftigen Mangel und/oder Überschuss an Energie aus erneuerbaren Quellen innerhalb des elektrischen Netzes (2) charakteristisch sind;
- Erzeugens eines Leistungssollwerts durch ein Verwaltungselement (30) in Abhängigkeit von mindestens den beschreibenden Daten eines Zustands des elektrischen Netzes (2);
- Ausgebens des Sollwerts an ein Steuermodul (12) eines Heizmittels (110) der Heizvorrichtung (11), wobei das Heizmittel (110) vom elektrischen Netz (2) über einen Schaltwandler (120) gespeist wird, der den Wechselstrom des Netzes (2) zu Gleichstrom gleichrichtet, wobei der Schaltwandler (120) einen Gleichrichter (140) und einen Zerhacker (130) umfasst;
- Steuerns des Schaltwandlers (120) durch das Steuermodul (12) in Abhängigkeit vom Leistungssollwert, um die Leistung des Heizmittels (110) zu regeln.

## Claims

1. System (1) comprising:
- a heating device (11) comprising at least one heating means (110) supplied by an AC power grid (2);
- a control module (12) for controlling said heating device (11);
the system being **characterised in that** the heating means (110) is supplied via a switching converter (120) rectifying the alternating current of the grid (2) into direct current, the switching converter (120) comprising a rectifier (140) and a chopper (130), the switching converter (120) being controlled by the control module (12) in accordance at least with descriptive data of a state of said power grid (2) characteristic of a present deficit and/or of a future excess amount of energy of renewable origin within said power grid (2), so as to adjust the power of the heating means (110).

2. System according to claim 1, further comprising a water tank (10), the heating device (11) heating the water of the tank (10).

3. System according to one of claims 1 and 2, further comprising a managing element (30) configured to control the control module (12) in accordance with said descriptive data of a state of said power grid (2).

4. System according to claim 3, wherein the control module (12) controls each power device in accordance with a power set point issued by the managing element (30).

5. System according to claims 2 and 4 in combination, wherein the managing element (30) is configured to issue a power set point reducing the consumption of the heating means (110) when the descriptive data of a state of said power grid (2) are characteristic of a present deficit and/or of a future excess amount of energy of renewable origin within said power grid (2), so as to reduce the energy capacity of the tank (10).

6. System according to claim 5, wherein the control module (12) is configured to ignore the power set point when a temperature of the water in the tank (10) is lower than a first predefined threshold.

7. System according to claim 2 and one of claims 4 to 6 in combination, wherein the managing element (30) is configured to issue a power set point increasing the consumption of the heating means (110) when the descriptive data of a state of said power grid (2) are characteristic of a present excess amount and/or a future deficit of energy of renewable origin within said power grid (2), so as to increase the energy capacity of the tank (10).

8. System according to claim 7, wherein the control module (12) is configured to ignore the power set point when a temperature of the water in the tank (10) is higher than a second predefined threshold.

9. System according to one of claims 3 to 8, further comprising a case (31) receiving said descriptive data of a state of said power grid (2) from a communication network (3), the case (31) being connected to said managing element (30) or to the control module (12).

10. System according to one of the preceding claims, wherein the heating means (110) has a rated power higher than 1.2kW.

11. System according to one of claims 1 to 10, wherein the rectifier (140) of the switching converter (120) comprises a diode bridge.

12. System according to one of claims 1 to 11, wherein the chopper (130) of the switching converter (120) comprises at least one operated switching transistor (131), a microcontroller (132) of said transistor (131) connected to the controlled module (12), at least one diode (133), and at least one filtering reactive element (134).

13. System according to claim 12, wherein each operated switching transistor (131) is selected from the metal oxide semiconducting field effect transistors (MOSFET) and the insulated gate bipolar transistors (IGBT), and each filtering reactive element (134) is selected from the capacitors and inductors.

14. System according to one of the preceding claims, further comprising a short-circuit means (150) of the switching converter (120) controlled by the control module (12).

15. Method for modifying the consumption of a heating device (11), the method being **characterised in that** it comprises the steps of:
- receiving descriptive data of a state of an AC power grid (2), characteristic of a present deficit and/or of a future excess amount of energy of renewable origin within said power grid (2);
- generating by a managing element (30) a power set point in accordance at least with said descriptive data of a state of said power grid (2);
- issuing said set point to a control module (12) of a heating means (110) of the heating device (11), the heating means (110) being supplied by the power grid (2) via a switching converter (120) rectifying the alternating current of the grid (2) into direct current, the switching converter (120) comprising a rectifier (140) and a chopper (130);
- controlling by the control module (12) the switching converter (120) in accordance with the power set point so as to adjust the power of the heating means (110).
